# EUROPEAN PATENT APPLICATION

(11) **EP 1 411 287 A1**
(43) Date of publication of application: **21.04.2004**
(21) Application number: 03256601.0
(22) Date of filing: 20.10.2003
(51) Int. Cl.: F16L 5/04

(54) **Fire resistant passageway apparatus for a conduit**

(30) Priority: 19.10.2002 GB 0224411; 24.07.2003 GB 0317254
(71) Applicant: Selkirkflue Limited, Barnstaple, Devon EX31 1LZ (GB)
(72) Inventor: Gomersall, Paul, Barnstaple, Devon EX32 9DF (GB)
(74) Representative: Jackson, Nicholas Andrew

(57) **Abstract**

Fire resistant passageway apparatus 10 for a conduit 12 comprises passageway means in the form of a first plate 14 and a second plate 16. Each plate 14, 16 comprises an aperture 15, 17 in order for the conduit 12 to pass therethrough. The first plate 12 and the second plate 16 have ventilation slots 20 in order to enable gas to flow through the fire resistant passageway apparatus 10. The apparatus comprises fire resistant means in order to prevent or inhibit a fire from passing through the ventilation slots 20 wherein the fire resistant means comprises an intumescent matrix 22 which swells or expands in order to prevent fire passing through the ventilation slots.

## Description

### Field of the Invention

The present invention relates to fire resistant passageway apparatus for a conduit, an assembly comprising fire resistant passageway apparatus and a conduit and a method of providing a fire resistant passageway for a conduit.

### Background to the Invention

Conduits, and more specifically flues, are arranged to pass through walls and floors in order to direct and guide gases away from appliances, for example fires etc. Such flues may pass through fire combustible floors or walls or other fire resistant barriers. The passage of a flue through a combustible floor may reduce the integrity of the combustible floor. In general, floors should have a fire rating of 30 minutes, this is the time taken for a fire to penetrate the floor. The passage of the flue may thereby enable a fire in one room to spread relatively quickly to an adjacent room and for the floor not to have a sufficient fire rating.

Flues may be concealed within an enclosure, for example within a box wall, to visually conceal the flue which may otherwise be visible. In particular, flues are generally concealed in domestic properties in bedrooms etc. Since the flue is arranged to contain and guide hot gases, the flue naturally becomes hot. Accordingly, as the flue passes through a floor or wall it is generally accepted to provide a passageway for the flue using a ventilation grill. The ventilation grill dissipates heat and enables hot or warm air to flow therethrough whilst preventing the enclosure from becoming hot and more specifically prevents the walls of the enclosure becoming hot. However, the opening and slots in the ventilation grill enables fire to pass therethrough and thereby reduces the integrity of the wall or the floor.

It is an aim of the present invention to overcome at least one problem associated with the prior art whether referred to herein or otherwise.

### Summary of the Invention

According to a first aspect of the present invention there is provided fire resistant passageway apparatus for a conduit, the apparatus is arranged, in use, to enable the conduit to pass through a barrier, the fire resistant passageway apparatus comprising passageway means, the passageway means having an aperture therein for a conduit to pass therethrough, the passageway means further comprising an opening therein in order to enable gas to pass therethrough, the fire resistant passageway apparatus further comprising fire resistant means to inhibit the passage of fire through the opening once the fire resistant means has been activated wherein the fire resistant means comprises an intumescent material and the opening comprises a ventilation opening to enable gas to flow around the conduit and through the barrier, in use.

The intumescent material may comprise an intumescent coating.

Preferably the intumescent material comprises an intumescent paint.

The intumescent material may initially comprise a fluid intumescent material which is applied to at least a part of the apparatus and may cure or dry on at least a part of the apparatus.

The conduit may comprise a fire resistant material.

The conduit may be arranged to withstand heat and for the intumescent material to activate externally with respect to the conduit.

Preferably, the conduit comprises a flue and more preferably a chimney flue.

The conduit may comprise a fire resistant material. The conduit may comprise a metal.

Preferably the conduit is arranged to remain intact during a fire and preferably will not collapse at 200°C. The conduit may withstand a temperature of 1000°C for 2 hours.

Preferably the conduit is arranged not to collapse on exposure to fire.

Preferably the fire resistant means prevents or inhibits the passage of fire only once the fire resistant means has been activated. The fire resistant means may be activated by exposure to fire or significant heat for example a temperature greater than 150°C and preferably a temperature greater than 200°C.

The fire resistant means may be arranged, once activated, to prevent fire passing through the fire resistant passageway apparatus for a predetermined length of time.

Preferably the intumescent material is arranged to prevent or inhibit a fire passing through the opening.

Preferably the opening comprises a ventilation opening to enable gas to flow around the flue through the fire resistant passageway apparatus. Preferably the ventilation opening comprises a plurality of ventilation openings or slots.

Preferably the intumescent material comprises an intumescent matrix.

Preferably the intumescent matrix locates adjacent to a second plate.

The intumescent matrix may be arranged to swell when subjected to excess heat in order to substantially seal or block the ventilation passageway.

The intumescent material may comprise a graphite based intumescent material.

The intumescent material may be rigid.

The intumescent matrix may comprise a first portion which substantially locates around the aperture through which the conduit is arranged to pass.

The intumescent matrix may comprise a second portion which substantially locates around the periphery of the passageway means.

The first portion may comprise a strip of an intumescent material which may locate around the conduit and preferably comprises an overlapping portion to surround an outer surface of the conduit. Preferably the first portion is spaced from the conduit by an annular spacing.

The second portion may comprise a plurality of strips of intumescent material. The strips of the intumescent material may form a contiguous ring. The second portion may comprise a square ring of intumescent strips. The second portion may have corner strips connecting adjacent intumescent strips at the corner of the square ring.

Preferably the passageway means defines a ventilation passageway therethrough.

Preferably, once activated, the intumescent matrix completely blocks or seals the ventilation passageway.

The intumescent matrix may be arranged to encapsulate the ventilating passageway through the passageway means.

Preferably the passageway means comprise a first plate and a second plate.

Preferably the first plate and the second plate have a plurality of openings defined therein. Preferably the openings comprise ventilation openings and more preferably comprise ventilation slots. The ventilation slots may comprise radial ventilation slots. Each radial ventilation slot may extend from adjacent to the aperture for the conduit towards the edge of the or each plate. The ventilation slots may form a generally circular ventilation area which may be concentric with the aperture for the conduit.

The intumescent material may be provided on at least a part of a surface of the first plate.

The intumescent material may be provided on at least a part of a surface of the second plate.

Preferably the apparatus is arranged in use to enable the conduit to pass through a barrier and more preferably a planar structure, for example a floor or a ceiling or a wall. The conduit may be arranged to pass through a combustible barrier for example a combustible floor.

Preferably the first plate is arranged, in use, to locate on a first side of the barrier and the second plate is arranged, in use, to locate on a second side of the barrier.

The fire resistant passageway apparatus may comprises a housing to enclose the passageway apparatus laterally. For example, the first plate may locate at one end, the second plate may locate at a second end and the housing completes the lateral sides of the apparatus. Preferably the housing prevents gas passing or escaping laterally from the apparatus. The ventilation passageway may comprise an inlet, a passageway portion and an outlet through the apparatus. The housing may provide the passageway portion. The first plate may define the outlet. The second plate may define the inlet.

The fire resistant passageway means may comprise support means in order to (at least partially) support the conduit. The support means may extend around the outer periphery of the conduit, in use. The support means may be adjustable. The support means may be adjusted in order to grip a part of the outer periphery of the conduit. The support means may comprise a support collar. The support collar may be provided on the first plate and/or second plate.

According to a second aspect of the present invention there is provided an assembly comprising fire resistant passageway apparatus and a conduit, the apparatus is arranged, in use, to enable the conduit to pass through a barrier, the fire resistant passageway apparatus comprising passageway means, the conduit being arranged to pass through an aperture defined in the passageway means, the passageway means comprising an opening to enable a gas to pass therethrough, the fire resistant passageway apparatus comprising fire resistant means to inhibit the passage of fire through the opening once the fire resistant means has been activated wherein the fire resistant means comprises an intumescent material and the opening comprises a ventilation opening to enable gas to flow around the conduit and through the barrier, in use.

Preferably the conduit comprises a flue and more preferably a chimney flue.

The conduit may comprise a fire resistant material. The conduit may comprise a metal.

Preferably the conduit is arranged to remain intact during a fire and preferably will not collapse at 200°C. The conduit may withstand a temperature of 1000°C for 2 hours.

Preferably the conduit is arranged not to collapse on exposure to fire.

According to a third aspect of the present invention there is provided a method of providing a fire resistant passageway for a conduit passing though a barrier comprising locating a part of the conduit through an aperture provided by passageway means of fire resistant passageway apparatus, the passageway means having an opening defined therein to enable gas to pass therethrough, the method comprising providing fire resistant means in the fire resistant passageway apparatus to inhibit the passage of fire through the opening once the fire resistant means has been activated wherein the fire resistant means comprises an intumescent material and the opening comprises a ventilation opening to enable gas to flow around the conduit and through the barrier, in use.

The method may comprise coating a part of the apparatus with an intumescent material and may comprise coating a part of the apparatus with an intumescent paint.

According to a fourth aspect of the present invention there is provided fire resistant passageway apparatus for a conduit, the fire resistant passageway apparatus comprising passageway means, the passageway means having an aperture therein for a conduit to pass therethrough, the passageway means further comprising an opening therein in order to enable gas to pass therethrough, the fire resistant passageway apparatus further comprising fire resistant means to inhibit the passage of fire through the opening once the fire resistant means has been activated.

Preferably the fire resistant means prevents or inhibits the passage of fire only once the fire resistant means has been activated. The fire resistant means may be activated by exposure to fire or significant heat for example a temperature greater than 150°C and preferably a temperature greater than 200°C.

Preferably the fire resistant means comprises an intumescent material.

The fire resistant means may be arranged, once activated, to prevent fire passing through the fire resistant passageway apparatus for a predetermined length of time.

### Brief Description of the Drawings

The present invention will now be described, by way of example only, with reference to the drawings that follow, in which:
Figure 1 is a perspective view of a preferred embodiment of fire resistant passageway apparatus supporting a conduit.
Figure 2 is a perspective exploded view of a preferred embodiment of fire resistant passageway apparatus.
Figure 3 is a side view of a preferred embodiment of fire resistant passageway apparatus.
Figure 4 is a plan view of a preferred embodiment of a first plate of fire resistant passageway apparatus.
Figure 5 is a plan view of a preferred embodiment of a second plate of fire resistant passageway apparatus.
Figure 6 is a plan view of an embodiment of an intumescent matrix.
Figure 7 is a perspective view of a further embodiment of fire resistant passageway apparatus supporting a conduit.

### Brief Description of the Preferred Embodiments

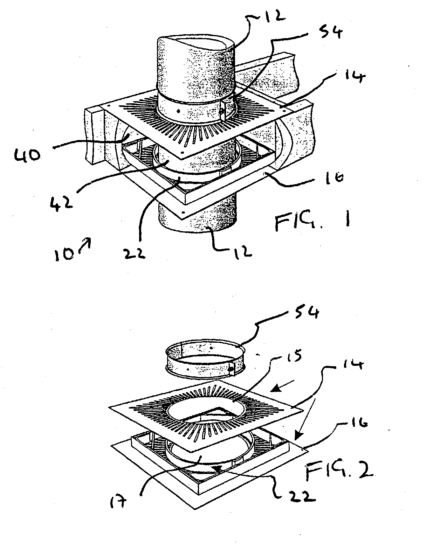

As shown in Figure 1 and 2, fire resistant passageway apparatus 10 for a conduit 12 comprises passageway means in the form of a first plate 14 and a second plate 16. Each plate 14, 16 comprises an aperture 15, 17 therein in order for the conduit 12 to pass therethrough. The apertures 15, 17 are located centrally on the respective plates 14, 16. The diameter of each aperture may be in the region of 160mm to 270mm for use with flues having a diameter in the region of 100mm to 200mm. The plates 14, 16 may have a length in the range of 340mm to 450mm.

As shown in Figure 3, each plate 14, 16 has a respective collar 50, 52 which is arranged to extend along a longitudinal direction of the flue 12. The collars 50, 52 extend towards each other from the respective plates 14, 16. In particular, the collar 50, 52 extend inwardly in the fire resistant passageway apparatus 10.

The conduit 12 comprises a flue for a chimney in order to contain and guide gases from an appliance, for example a fire. The apparatus 10 includes fire resistant means in the form of an intumescent material in order to prevent fire spreading through the space adjacent to the conduit and in particular through a ventilation opening located around the conduit.

The conduit comprises a fire resistant material and in particular comprises a chimney. In the event of a fire, the chimney is designed to remain intact for a length of time and would not collapse, at least in a relatively short time period as compared to plastic or other pipes. Accordingly, the intumescent material is arranged to activate to encompass the conduit and to seal the area external of the chimney rather than any space left void by a collapsing pipe in a fire.

The chimney is manufactured from a material which withstands temperatures in excess of 1000°C and which in the event of a fire would remain intact for a minimum period of 2 hours. Specifically the chimney will not collapse in the outbreak of a fire an there may be no reason to block the chimney passage in the event of a fire. In particular, the chimney comprises a metal, for example stainless steel, copper or coated steel. The chimney and passageway means are designed to withstand temperatures greater than 200°C indefinitely. Accordingly, chimneys are distinguished from other conduits including collapsing conduits which are not manufactured from metal and are normally polymers such as soil pipes, which may collapse at 200°C.

The flue 12 may secured to the fire resistant passageway apparatus 10 by securement means in the form of a support collar 54. Accordingly, the fire resistant passageway apparatus 10 comprises support means in the form of a support collar. However, in alternative embodiments of the present invention, the apparatus does not support the flue and merely provides a fire resistant passageway for the flue 12 to pass through. For example, a collar may be provided but does not actually provide support to the flue or alternatively the plates simply provide an aperture which the flue passes through and if any gap is formed between the flue and the plate(s) then this gap will also be sealed by the intumescent material once activated (in the same way as the ventilation passageway). The support collar 54 is arranged to locate around the circumference of the flue 12 and is urged against the outer wall 42 of the flue 12 in order to grip the outer wall of the flue 12. The grip may be provided by the collar being formed in two semi-circular sections with two adjustable securement elements, for example screws 56, being arranged to connect the ends of the two sections such that tightening of the screws urges the two semi-circular sections towards each other. This movement reduces the circumference or space between the two sections thus enabling the collar 54 to grip the outer wall 42 of the flue 12.

The diameter of the collar 54 is greater than the diameter of the aperture 15 through the first plate 14 and, therefore, once the first plate is secured in position, the support collar 54 can be secured to the flue 12 at a suitable location in order for the lower face of the support collar 54 to rest on the upper surface of the first plate 14.

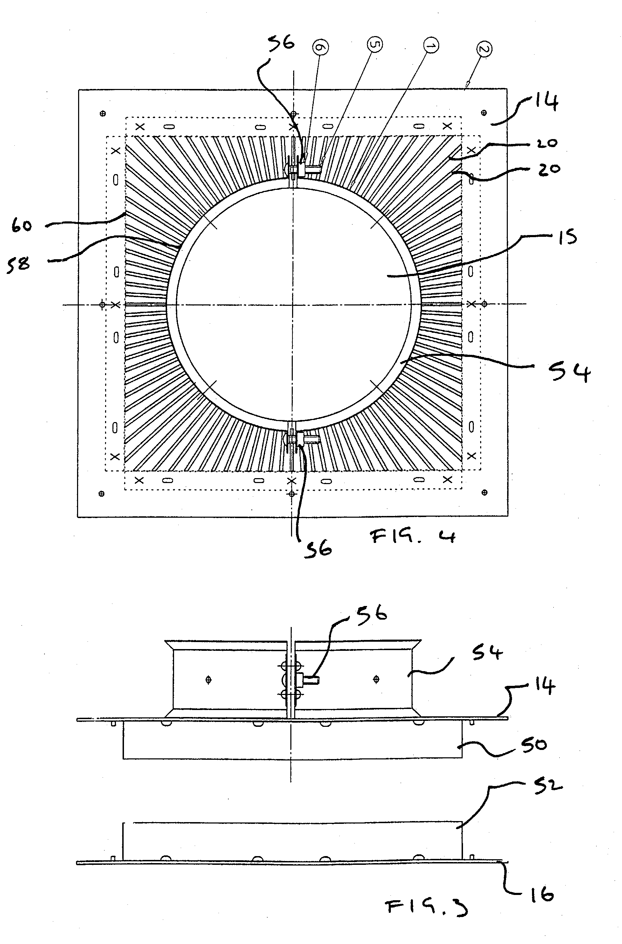

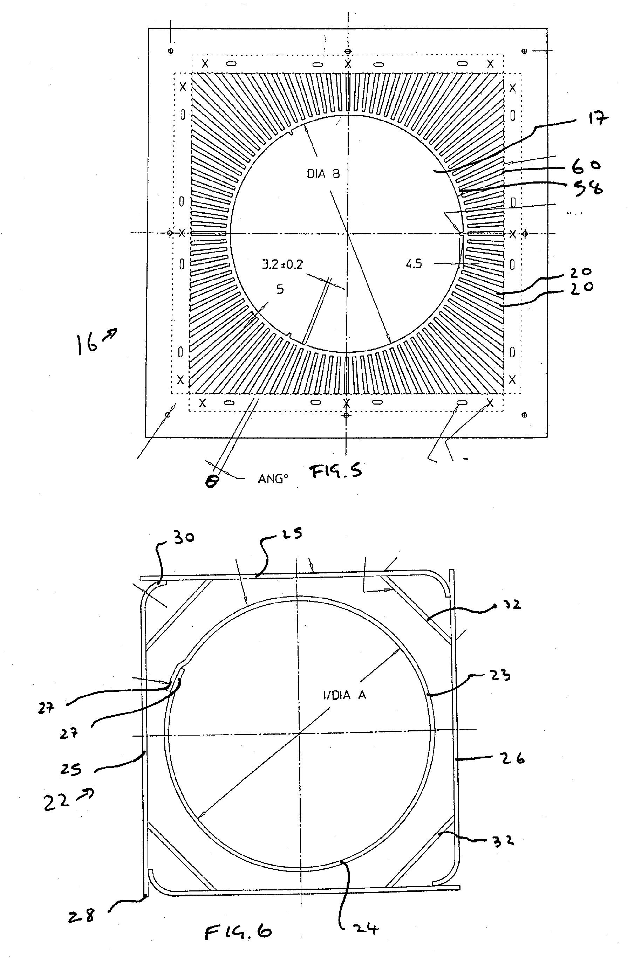

As shown in Figure 4 and Figure 5, the first plate 12 and the second plate 14 comprise heat dissipating means and preferably comprise metal plates. The first plate 12 and the second plate 16 have ventilation means in the form of a plurality of slots 20 or openings in the plates 14, 16 therein in order to enable gas to flow through the fire resistant passageway apparatus 10. This gas flow relates to gas flow outside the flue 12 and more specifically relates to a ventilation gas flow around the flue 12. The fire resistant passage apparatus 10 is arranged to provide a passageway for the flue 12 as it passes through a barrier and, in particular, a wall, ceiling or floor. The slots 20 or openings enable warm air to travel through the barrier for example upwards into vertically adjacent rooms or other space in order to cool the flue 12 and the walls 42 of the flue. In addition, the plates 14, 16 and the slots 20 efficiently dissipate heat away from the flue and prevent or inhibit the transfer of heat away from the flue 12 by the plates 14, 16. The slots 20 extend radially from an inner extent 58 to an outer extent 60. The slots 20 taper or are angled outwardly from the inner extent 58 to the outer extent 60. For example, the slots 20 may form an angle, θ between 14° and 2.5°. The inner extents of the slots 20 may form a substantially circular shape and the outer extents 60 of the slots may form a substantially square shape.

The flue 12 may be at least partially contained in an enclosure such that the flue 12 is not visible. For example, in some rooms in domestic accommodation it is preferred that the flue 12 is not visible and, in particular, when the flue 12 passes through a bedroom. The flue 12 may extend from the appliance through the ceiling/floor into the room located above where the flue 12 is then continued in an enclosure, for example a box wall.

The flue 12 is positioned and may be supported spaced from the walls of the enclosure in order to inhibit the transfer of heat from the flue 12 to the walls of the enclosure. In addition, where the flue 12 passes through a ceiling/floor the fire resistant passageway apparatus 10 is provided with ventilation means which also prevents or inhibits the transfer of heat from the flue 12 to the walls of the enclosure.

In particular, the floor or ceiling or other barrier or planar surface through which the flue us arranged to pass may be a combustible floor or other combustible barrier and building regulations may set a fire rating in a length of time that the floor (or other barrier) must not be penetrated by a fire. The ventilation means comprising slots 20 reduces the integrity and hence the fire rating of the combustible floor.

The fire resistant passageway apparatus 10 comprises fire resistant means in order to prevent or inhibit a fire from passing through the passageway apparatus 10 and more specifically through the ventilation slots 20 of the first plate 14 and the second plate 16. The fire resistant means comprise an intumescent matrix 22 which is located between the first plate 14 and the second plate 16. Accordingly, if a fire starts in a lower room, as the intumescent matrix 22 is exposed to the heat from the fire, the intumescent matrix 22 swells or expands in order to prevent or inhibit the passage of fire through the fire resistant passageway apparatus 10. The exposure to heat or fire thereby activates the intumescent matrix 22.

Prior art ventilating passageways for conduits do not include an intumescent matrix or other fire resistant means and, thereby, such supports reduce the integrity of fire resistant floors.

The intumescent matrix 22 is arranged to locate in or adjacent to the second plate 16 or the lowermost plate. The intumescent matrix 22 is arranged to encapsulate or surround the ventilation passageway through the passageway means. The ventilation passageway is defined by the slots 20 in the plates and also within the passageway apparatus between an internal wall 40 and the wall 42 of the flue 12. The internal wall 40 is provided by a housing which may be constructed by building a square enclosure, for example by securing four pieces of wood to each other, as shown in Figure 1. The internal wall 40 of the square structure thereby contains the gas flowing around the flue 12. Accordingly, the ventilation passageway may have a plurality of inlets provided by the openings 20 in the second plate 16, and a passageway portion defined between an internal wall 42 of the fire resistant passageway apparatus 10 and the external wall 40 of the flue and, finally, a plurality of outlets provided by the slots 20 in the first plate 14. The intumescent matrix 22 is arranged to seal this ventilation passageway to prevent the passage of fire therethrough, once the intumescent matrix 22 is exposed to fire. In particular, the intumescent matrix is arranged, in use, to seal the ventilation passageway defined between the internal wall 40 and the wall 42 of the conduit. Accordingly, the internal wall 40 provides a housing of the apparatus 10.

As shown in Figure 6, the intumescent matrix 22 comprises a first portion 24 comprising a first strip 23 of an intumescent material which is arranged to locate around the flue 12. The first strip 24 is spaced from the outer surface 42 of the flue 12 such that the strip 24 forms a concentric circle with the outer surface of the flue 12. This creates an annular spacing which prevents or inhibits heat being transferred from the outer surface of the flue 12 to the strip 23.

The ends 27 of the first strip 23 are over lapped to form a full circle. This overlapped portion enhances the fire resistant properties since once the intumescent strip 24 is exposed to fire then the overlapped portion ensures that the intumescent material expands around the entire circumference of the flue 12 and hence evenly throughout the ventilation passageway.

The intumescent matrix 22 comprises a second portion 26 forming an outer wall in order to substantially enclose the ventilation passageway between the first portion 24 and the second portion 26. However, in a preferred embodiment the first portion 24 may be located slightly radially outwardly from the inner extents of the slots 20. The second portion comprises a plurality of strips 25 of an intumescent material. The strips 25 form a contiguous surface around the ventilation passageway. Each strip 25 effectively forms one side of a substantially square shaped structure. Each strip 25 extends from a first end 28 to a second end 30. The second end 30 of each strip 25 is angled and abuts a part of an adjacent strip 25. This arrangement optimises the fire resistant properties once the intumescent matrix 22 is exposed to a fire.

In addition, the intumescent matrix comprises corner portions 32 which locate in each corner of the second portion 26 of the intumescent matrix 22. Each corner portion 32 comprises a strip of an intumescent material which extends from a first strip 25 to an adjacent second strip 25. When the intumescent matrix 22 is exposed to a fire each of the intumescent strips 23, 25, 30 swells or expands and the intumescent matrix 22 forms an insulating sponge. The intumescent strips 23, 25, 30 expand and char and thereby form a heat resistant barrier that reduces the transfer of heat through the fire resistant passageway apparatus 10. The corner portions 30 effectively reduce and minimise the separation distance between the first portion 24 and the second portion 26 of the intumescent matrix 22. The reduction of this separation distance thereby ensures that the ventilation passageway is sealed once the intumescent matrix 22 is exposed to fire.

The intumescent material is a graphite based intumescent material although other types of intumescent material may be suitable. The intumescent material must not expand at too low a temperature since this would result in the ventilation being closed off during normal operating temperatures created by the flue or chimney.

The graphite based intumescent material is rigid and is used in strips which may be 37.5mm high and 4mm wide and covered in foil. The strips are rigid and are taped on to the plate to hold the strips in place or alternative suitable fixing means may be used. Once exposed to fire, the intumescent matrix completely blocks the ventilation passageway. The intumescent matrix beings to expand at approximately 200°C.

The fire resistant passageway apparatus 10 may be sized for use with flues of differing diameters. For example, the diameter of the flue may be 100, 130, 150, 180 or 200mm. In addition, the number of slots 20 provided in the plates 14, 16 may be altered to suit flutes of different sizes. For example, each plate may have 72, 79, 86, 93 or 100 slots. Each plate may be 2mm or 3mm thick depending on the flute size. Preferably the plates 14, 16 comprise a metal, for example galvanised steel.

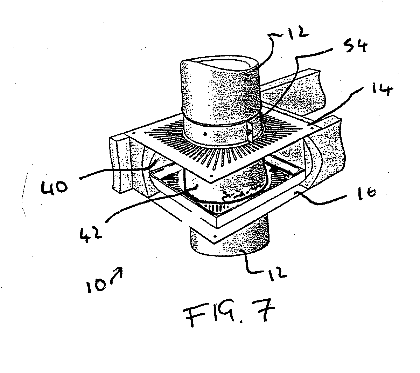

As shown in Figure 7, a further embodiment of fire resistant passageway apparatus 10 for a conduit 12 comprises passageway means in the form of a first plate 14 and a second plate 16. Intumescent material in the form of a coating, for example an intumescent paint, is applied to a part of the apparatus 10. In particular an intumescent paint or other coating is applied to a part of the first plate 14 and/or a part of the second plate 16. The intumescent paint may be applied on the upper and/or lower surface of the first plate 14 and/or the upper and/or lower surface of the second plate 16. More specifically the intumescent paint may be applied on the underside of the second plate 16 (or ceiling plate) and/or top of the second plate 16 (or ceiling plate) and/or the underside of the first plate 14 (or floor plate) and/or the top of the first plate (or floor plate).

The intumescent paint (or other suitable coating) comprises a fluid paint or specifically a liquid paint which is applied to a part of the surface of the first plate 14 and/or the second plate 16 and the intumescent paint cures or dries on the respective surface.

In the further embodiment the use of an imtumescent matrix 22 is not required. The intumescent coating is arranged to swell and seal the ventilation passageway to prevent the passage of fire therethrough once the intumescent coating is exposed to fire or significant heat as previously described.

In particular, the intumescent coating prevents the passage of fire through the ventilation opening which may be defined between the wall of the conduit and a housing. The conduit comprises a fire resistant or heat resistant material, since the conduit may be a chimney. Accordingly, the conduit is arranged not to collapse in the initial stages of a fire and may only collapse after a prolonged and significant fire. At the stage of collapse of the chimney the use of an intumescent material to block the space left by the collapsed conduit would not be required since the fire would already have spread and an aim of the invention is to improve the integrity of a barrier. It is likely that at the point that the chimney collapses the barrier would have been penetrated by fire in any event.

In one embodiment, the intumescent material may include both an intumenscent coating (for example an intumescent paint) and an intumescent matrix.

The intumescent material may not be arranged to seal the space left by a collapsed conduit but is arranged to locate around the wall of the conduit.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Fire resistant passageway apparatus for a conduit, the apparatus is arranged, in use, to enable the conduit to pass through a barrier, the fire resistant passageway apparatus comprising passageway means, the passageway means having an aperture therein for a conduit to pass therethrough, the passageway means further comprising an opening therein in order to enable gas to pass therethrough, the fire resistant passageway apparatus further comprising fire resistant means to inhibit the passage of fire through the opening once the fire resistant means has been activated wherein the fire resistant means comprises an intumescent material and the opening comprises a ventilation opening to enable gas to flow around the conduit and through the barrier, in use.

2. Apparatus according to claim 1 in which the intumescent material comprises an intumescent coating.

3. Apparatus according to claim 1 or claim 2 in which the intumescent material initially comprises a fluid intumescent material which is applied to at least a part of the apparatus and cures on at least a part of the apparatus.

4. Apparatus according to any preceding claim in which the conduit comprises a chimney flue.

5. Apparatus according to any preceding claim in which the conduit is arranged to remain intact during a fire and will withstand a temperature of 1000°C for 2 hours.

6. Apparatus according to any preceding claim in which the fire resistant means prevents or inhibits the passage of fire only once the fire resistant means has been activated.

7. Apparatus according to claim 6 in which the fire resistant means is activated by exposure to heat having a temperature greater than 150°C.

8. Apparatus according to any preceding claim in which the fire resistant means is arranged, once activated, to prevent fire passing through the fire resistant passageway apparatus for a predetermined length of time.

9. Apparatus according to any preceeding claim in which The ventilation opening comprises a plurality of ventilation openings or slots.

10. Apparatus according to any preceding claim in which the intumescent material comprises an intumescent matrix.

11. Apparatus according to claim 10 in which the intumescent matrix is arranged to swell when subjected to excess heat in order to substantially seal or block the ventilation passageway.

12. Apparatus according to claim 10 or claim 11 in which the intumescent matrix comprises a first portion which substantially locates around the aperture through which the conduit is arranged to pass.

13. Apparatus according to claim 12 in which the intumescent matrix comprises a second portion which substantially locates around the periphery of the passageway means.

14. Apparatus according to any preceding claim in which the conduit is arranged to pass through a combustible barrier.

15. Apparatus according to any preceding claim in which the fire resistant passageway means comprises support means in order to (at least partially) support the conduit.

16. An assembly comprising fire resistant passageway apparatus and a conduit, the apparatus is arranged, in use, to enable the conduit to pass through a barrier, the fire resistant passageway apparatus comprising passageway means, the conduit being arranged to pass through an aperture defined in the passageway means, the passageway means comprising an opening to enable a gas to pass therethrough, the fire resistant passageway apparatus comprising fire resistant means to inhibit the passage of fire through the opening once the fire resistant means has been activated wherein the fire resistant means comprises an intumescent material and the opening comprises a ventilation opening to enable gas to flow around the conduit and through the barrier, in use.

17. A method of providing a fire resistant passageway for a conduit passing though a barrier comprising locating a part of the conduit through an aperture provided by passageway means of fire resistant passageway apparatus, the passageway means having an opening defined therein to enable gas to pass therethrough, the method comprising providing fire resistant means in the fire resistant passageway apparatus to inhibit the passage of fire through the opening once the fire resistant means has been activated wherein the fire resistant means comprises an intumescent material and the opening comprises a ventilation opening to enable gas to flow around the conduit and through the barrier, in use.
